# EUROPEAN PATENT APPLICATION

(11) **EP 2 767 912 A2**
(43) Date of publication of application: **20.08.2014**
(21) Application number: 14152719.2
(22) Date of filing: 27.01.2014
(51) Int. Cl.: G06F 17/30

(54) **In-memory real-time synchronized database system and method**

(30) Priority: 27.01.2013 US 201361757148 P
(71) Applicant: Travel Holdings Inc., Altamonte Springs, FL 32701 (US)
(72) Inventor: Palivatkel, Yossef, Ashdod (IL); Gridneau, Pavel, 42462 Netanya (IL)
(74) Representative: Fresh IP

(57) **Abstract**

The present invention relates to a computerized synchronization system of a database comprising a notification unit configured to be in communication with the database, and download data from the database. The system further comprises at least one search engine configured to be in communication with the notification unit. The search engine may include at least one in-memory synchronized database (IMSDB) which configured to store the downloaded data.

## Description

### Field of the Invention

The present invention relates to computerized search methods and systems and more particularly, to a computerized search systems including real-time notification procedures in response to data modification.

### Background of the Invention

The continuous growth in the number of internet users worldwide together with the constant increase in the number of e-commerce transactions call for advanced search engines capable of performing fast high throughput searches. Accordingly, database caching methods should also be optimized. Databases contain large volumes of data information. This data must be organized in order to allow programs, such as computerized programs or computer users to access the information.

A first example of prior art search solutions currently used relies on "Relational databases". According to the "Relational databases" search method the data is organized in a plurality of tables. Each data item is a row in the table (a record) having many columns of attributes or fields. A table is linked with additional tables by an important column (the foreign key(s)). That is, the tables in the database are related. For example, a database for a tourism business would have a table named "hotel" with a foreign key column linked to a table of "rooms" which would contain data for the different room types. Therefore when performing a search for the number of deluxe rooms in a hotel, there would be a pointer linking the hotel name with the type of rooms it has. All the data regarding the hotel, such as rates, services, limitations etc. are stored in the linked tables. The tables are arranged in a certain hierarchy to allow the search, for example using SQL (Structured Query Language). As SQL search is long and complex and as Relational Databases do not allow fast searches for some queries (for example, a query searching for "hotels for less than 50$ per night" will require a number of tables to be linked together) it will not resolve the need for a advanced search engines capable of performing fast high throughput searches.

Another search method known in the art is "NoSQL" database method. According to "NoSQL" database method the data is not organized into tables, rather there is a single document which contains all the information such as hotel rates, number of rooms etc. The document contains a key and a value, where the value contains all the data for that entity. For example, if Hotel1 has rooms of type A, B and C and Hotel2 has rooms D, E and F all the data is stored in a single document and not in several tables as in "Relational Database" method. One of the major disadvantages of the "NoSQ" database method is the lengthy search, especially when performing queries which require cross reference. For example, when searching for hotels for less than 50$ per night, the entire information for all hotels is retrieved and only later the answer is assembled. Such a search would require a long time and is even impossible in some cases.

As opposed to the above prior art methods, which are file-system based (data is all stored on the database), in a third prior art search method, known as Object-Relational Mapping (ORM) the data is virtually mapped as objects and saved in the RAM for use from within a computer program, without the need to directly access physical database files. This allows faster queries. ORM also has some drawbacks, saving in RAM means that there is no persistent storage, and therefore the changes must be saved to the database at the end of each update. The technique is easily applied in new databases, where that data is uploaded from scratch but in existing "legacy" databases it is difficult to change the saving method. In such systems which directly access the database there is need for continuous updating of the database, for example, if the rate in the database has dropped to 30$ it will still show 50$ in the RAM. Furthermore, since the method is still tabular there is still need to make calculations and link the tables when performing queries.

Thus there is a need for a system and method that will allow fast retrieval of data which can also be applied on existing legacy systems.

### Summary of the Invention

It is an object of the present invention to provide a system and method that will allow fast retrieval of information and can be easily scaled up to meet user needs.

It is another object of the invention is to provide a system and method that will allow short response time in general and specifically in scenarios where the number of users and queries increases or even doubles.

It is yet another object of the present invention to provide a system and method that may be easily implemented "on top" of legacy systems.

It is another object of the present invention to provide a robust and reliable search engine which is user friendly and easily implemented.

According to an aspect of some embodiments of the present invention there is provided a computerized data synchronization system of a database, said system comprising: a notification unit configured to be in communication with said database, and download data from said database; and at least one search engine configured to be in communication with said notification unit, said search engine comprises at least one in-memory synchronized database (IMSDB), wherein said search engine is configured to store the downloaded data in said IMSDB. In an embodiment, said search engine comprises at least one index database table according to pre-built structures. In an embodiment the search engine is connected to at least one interface that is in communication with at least one IMSDB.

According to one embodiment the time of loading or synchronizing data between said database and said IMSDB, the data are indexed by the search engine into at least one index database table.

According to another embodiment the data records are indexed by the search engine into at least one index database table according to pre-built structures.

According to another embodiment upon database update the notification unit generates a notification comprising at least one updated data record.

According to further another embodiment, the notification unit comprises: a network unit configured to manage notifications at said synchronization system network.

According to further another embodiment, the notification unit is in communication with at a plurality of servers and wherein each of said servers has at least one application.

According to further another embodiment, the system may include at least one notification machine configured to manage notifications in a system machine level; at least one notification manager that is configured to manage notifications in an application level; and a monitor that provides real-time monitoring services to said system network.

According to one embodiment the network unit comprises: a pre-defined set of subscriber types that are defined by a subset of the database data and wherein said database data comprise a list of tables and specific columns for each said table and wherein an application in the network unit is associated with at least one pre-defined subscriber type.

According to one embodiment the notification machine comprises: an updated map of applications on each said server and their subscriber type, wherein each application may run or load or down and wherein upon change in the application map the machine updates a monitor and the application is removed from map.

According to another embodiment of the invention the monitor comprises: updated map of servers running in the network unit; and updated map of all applications running on each server and their subscriber types.

According to yet another embodiment the monitor performs notification tracing and wherein upon search engine load the application subscribes itself to the network unit via the machine and said IMSDB is synchronized with at least one data record according to at least one pre-defined subscription type of said application.

According to another embodiment of the invention the system further comprises a second replicate database that stores all the data records of the database and during load time the system blocks database update by locking all participating tables on second replicate database.

According to another embodiment of the invention the system further comprises monitoring tools said monitor tools, comprising: a profiler configured to track segmentation of search types, search duration and number of results; memory snapshot that is configured to retrieve memory and database snapshots; and debug tool that allows production environment simulation by loading memory snapshot.

According to a second aspect of some embodiments of the present invention there is provided a computerized data synchronization method for synchronizing data records in real-time between a database and in-memory synchronized database (IMSDB) in a data synchronization system, the method comprising: reflecting updated data records to a Network unit; transmitting a notification from said network unit to at least one machine; transmitting the notification from the machine to at least one notification manager of at least one application; distributing the notification to at least one application according to at least one pre-defined subscriber type; transmitting notification to at least one search engine; indexing updated data records into index database tables by the search engine; and storing at least one index database table in IMSDB.

According to a third aspect of some embodiments of the present invention there is provided a method for searching for at least one data records in a computerized database, the method comprising: upon query provoked by an internet interface, a search engine searches an IMSDB index database tables; retrieves at least one data records by pointer walk; and sends query results to said interface.

The following terms are defined for clarity:
**Allegro network service -** Allegro Network Service (AN) is a service that pulls all the modifications made on an underline database and is responsible to send the modifications to the relevant subscribers.

**Subscriber-** is an application (any kind of application) which is interested in being notified about specific data modification (for example, one subscriber can be interested in changes in Table A, columns 1,4 and 5 while another subscriber is interested in Table A, Columns 1, 2, 6 and 7).

AN may maintain a list of subscribers and the specific data which they are subscribed to, and for example only changes that apply to the subscriber will be sent to him, this allow efficient network control (avoid sending unnecessary notification).

**Allegro machine service -** Allegro Machine (AM) is a similar service to AN, however while AN control the delivery of notifications from the underlying database to the machines, the AM controls the delivery of notifications from the machine to hosted applications. For example, each machine may host several applications, as noted earlier, each application is a subscriber, in some cases, different instances of the same application/subscriber are hosted on the same machine, for example, in a case a machine hosts 3 applications, the AN will need to send 3 notifications of the very same information, which leads to inefficient network utilization. To solve the inefficiency the AM is activated. The AM recognizes that the machine has 3 applications of the same type (i.e. same subscriber) and subscribes the machine only once, as a result AN sends only one notification to this machine, AM will grab this notification and will send it to each one of the applications within this machine. This way efficient network utilization is achieved.

**Allegro cacheloader -** Allegro cache loader is responsible for allowing fast data load from the underlying database. In case of machine restart or power outage the application needs to re-load all the data. The cache loader loads the data, for example only once from the database, caches the data in format the application expects, when the load request comes, the request can be served from the cache loader RAM rather than going again to database.

**Allegro notification manager -** the notification manager (ANM) is an agent hosted in each application and is responsible for the communication with AM, receiving the notification from AM, processing it and forwarding it to the application, this way the application doesn't need to handle or be aware of all the notification mechanism.

**Maestro -** is a gate to the system where partners can send modifications regarding their inventory.

All the above and other characteristics and advantages of the invention will be further understood through the following illustrative and non-limitative description of embodiments thereof, with reference to the appended drawings.

### Brief Description of the Drawings

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
Fig. 1 is a diagram illustrating a synchronization architecture system and method, according to an embodiment of the present invention;
Fig. 2 is a diagram illustrating a method of synchronization between the data base and IMSDB, according to an embodiment of the present invention;
Fig. 3 is a diagram illustrating a notification unit, according to an embodiment of the present invention;
Figs. 4A-4B are flowcharts illustrating implementation of an embodiment of the present invention for generating a new notification, according to an embodiment of the present invention;
Figs. 5A-5C are flowcharts further illustrating the implementation of an embodiment of the present invention from a software perspective;
Fig. 6 is a diagram illustrating a method for searching at least one data records in the data synchronization system, according to an embodiment of the present invention;;
Fig. 7 is a diagram illustrating the notification unit components, according to an embodiment of the present invention;

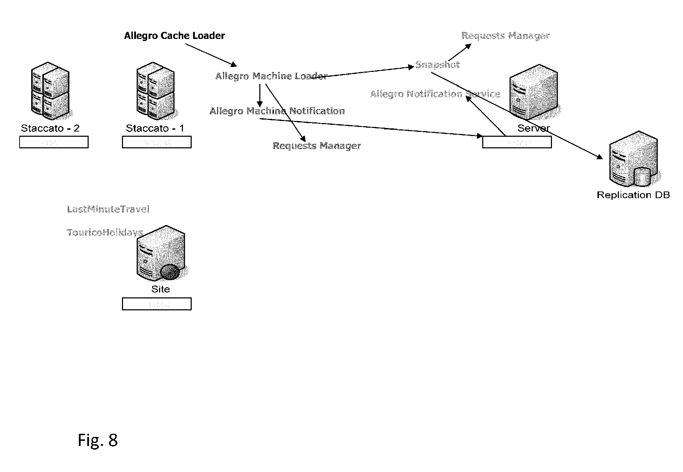

Fig. 8 is a diagram illustrating a load process, according to an embodiment of the present invention;

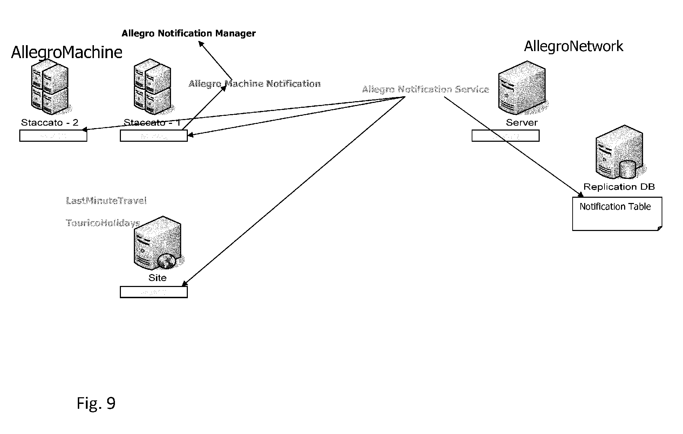

Fig. 9 is a diagram illustrating a Notification process according to an embodiment of the present invention;
Fig. 10 is a diagram illustrating components of the notification unit, according to an embodiment of the present invention; and
Fig. 11 is a diagram illustrating the synchronization system architecture, according to an embodiment of the invention.

### Detailed Description of Embodiments of the Invention

The present invention relates to a computerized synchronization system and method for updating in real-time database information in random access memory (RAM). The present invention further relates to computerized search methods having a swift response time.

While current prior art search methods and systems do not update cached memory in real-time the present invention system and method is configured to update in real-time data base information in RAM.

Embodiments of the present invention are applicable for example to computerized catalog sales and/or bookings and inventory management.

According to one embodiment of the invention there are provided a notification unit (hereinafter "Allegro") and synchronization unit (hereinafter "Staccato") for updating in real-time database information in RAM.

Allegro is the Cache Synchronization Service Layer that is intended for keeping all services and applications' data structures and cache synchronized data in near real-time with the main database repository - while keeping to minimum the network resources and promising sending only needed updates based on application needs.

Staccato is the In Memory Synchronized Database (IMSDB) which serves as an ultra-fast internal search engine. It answers in an average time, of for example less than 2 milliseconds, giving users and interfaces the ultra-high performance and scalability they need.

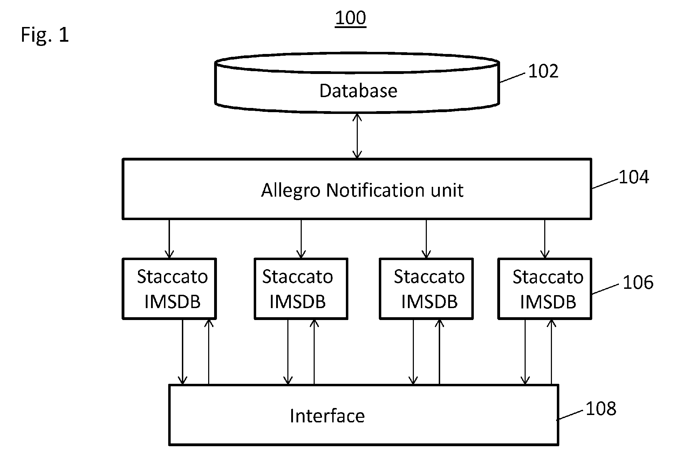

Referring now to the drawings, Figure 1 illustrates a computerized data synchronization system 100 according to one embodiment of the present invention. The synchronization system 100 is configured to synchronize data records between a database and in-memory synchronized database (IMSDB). System 100 may include: a database 102 that stores a plurality of data records; an Allegro notification unit 104 that is in communication with the database 102; at least one Staccato search engines 106 that are in communication with the Allegro notification unit 104. According to some embodiments of the invention the Staccato search engine comprises in-memory synchronized database (IMSDB), and at least one database tables such as index database tables according to pre-built structures. The data synchronization system 100 may also include at least one interface 108 that may be in communication to at least one Staccato IMSDB 106. The interface may use at least one data records and related information stored on database 102 and present them to a user such as an internet user. The unique architecture of the system of the present invention maintains the integrity of the database since all communication to and from the database is performed via Allegro notification unit and searches are carried out on the IMSDB. According to an embodiment of the invention the interface may be a user interface such as internet website, windows application or an API

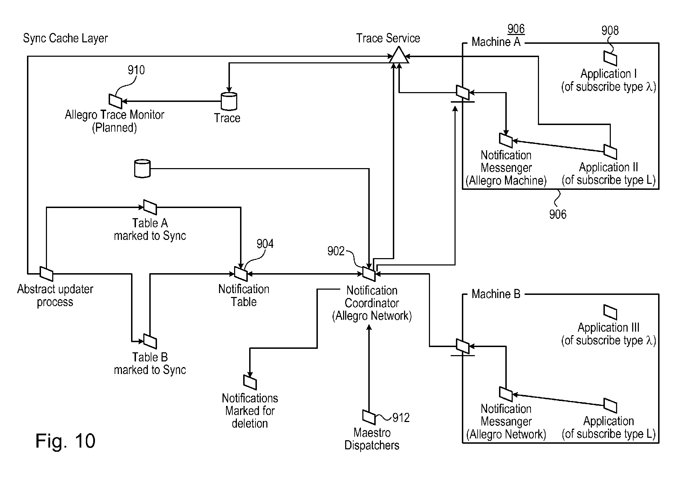

According to an embodiment of the invention, which is illustrated in Fig. 10, the Allegro notification unit has the following components: database trigger based notifications, where each database table to be synchronized is registered with a SQL Trigger responsible for generating transactional pre and post updated records saved in a dedicated central notification table 904; Allegro Network 902 that is a central database level notification filtering and routing service which continuously fetches notifications and routes notifications based on subscriptions granulated up to the field level to registered servers using the Microsoft's efficient transactional guaranteed (MSMQ) infrastructure; Allegro Machine 906, that is a machine level routing agent and registration point which listens for applications 908 subscription requests on the local server level, registers them with Allegro Network 902, and transforms MSMQ notification messages into standard Application Programming Interface (API) calls on the applications 908 callback method; and Application 908 level Notify API that is a standard sync API that each sync registered application 908 implements to receive structured notifications to update its data.

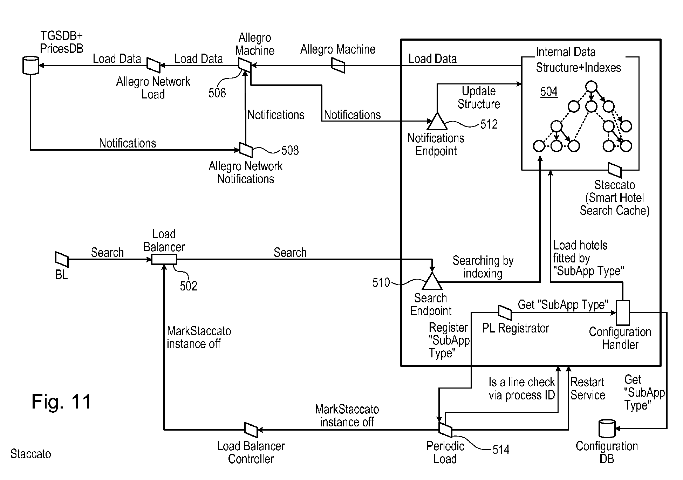

In an embodiment of the invention, the Staccato synchronization unit, illustrated in Fig. 11, which serves as the ultra-fast internal search engine that enables interfaces, for example, sites and web services to give users, such as clients, agencies and travel companies ultra-high performance and scalability they need. Its synchronization abilities promise to keep its data up to date in a near real time or real time manner. It allows higher scalability and extra performance by maintaining an array of Staccato services behind internal load balancer 502. Staccato has the following components: Internal Data structure and Indexes 504, where Staccato reads a subset of records in the database via Allegro machine 506 and Allegro network 508 or via files generated by another Staccato service (data replication), and stores this data in a structure optimized for fast access for searches; Search endpoint 510 that is a net remoting port to serve incoming search requests by various criteria, for example in the tourism industry, Destination, Dates, Number of rooms Price, Hotel/Activity Name, Hotel/Activity IDs, Availability, Number guests and children, Provider and Brand etc.; Notification Endpoint 512 - since Staccato holds cached data structures, the data may become outdated. Staccato may keep its data updated by receiving notifications from Allegro Network 508 via MSMQ and Allegro Machine 506 or from Maestro Dispatchers (Figures 10, 912) and Periodic Load 514 registration that is a service which restarts Staccato in scheduled times. Staccato, according to some embodiments needs to register itself to the Periodic Load service 514 once it is ready to perform searches - so Periodic Load 514 will know that there are enough Staccato instances up and running.

As shown in Figure 1 the Allegro Notification unit 104 of the present invention is configured to load and update data records from the database 102 to the Staccato IMSDB 106, for example when running a new search engine, while the IMSDB 106 is configured to receive the data from the Allegro Notification unit 104 and synchronize the data records for example in an "index" format in real-time following the updating of the data records stored on a database, thus enabling performing searches for data records saved on a database, according to queries provoked by users via the system interface. For example, according to some embodiment of the invention, during a loading or synchronizing process of the data records to the IMSDB 106 search engine, the data records are indexed into at least one index database tables according to pre-built structures, and these tables are saved into the IMSDB 106. The index structures are built with performance oriented perspective, often having several views for the same data record in order to achieve the fastest search possible within reasonable amount of memory consumption. For example, tourism-related indexes could be: destination, available dates and minimum 2 night stay. By building "smart" structures and pre-computed indexes which are populated during the load, the number of operations required for the search process is dramatically reduced. Data is uploaded from the database 102 and indexed in-memory upon first loading of the system, then the data is continuously streamed, therefore any updates in the database 102 are synchronized in real-time to the IMSDB 106.

According to an embodiment of the invention, the Allegro notification unit 104 may be part of an infrastructure system that can support various applications and databases such as database 102. The role of Allegro notification unit 104 is to ensure data integrity and data consistency across different machines and applications. For example Allegro notification unit 104 may be a routing service which continuously fetches notifications from a database such as the database 102 and transmits them to the at least one IMSDB 106. The Allegro notification unit 104 may include three main components: (1) Allegro Network unit that manages notifications in the network level; (2) Allegro Machine unit that manages notifications in the machine level, and (3) Allegro Notification Manager unit that manages notifications in the application level.

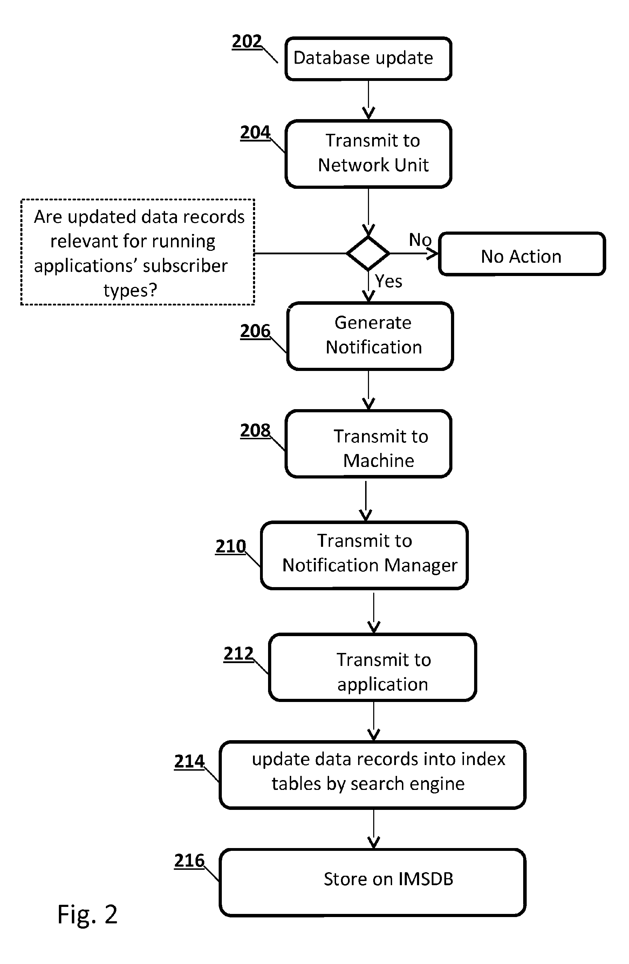

Embodiments of the present invention provide for a data synchronization method for synchronizing data records in real-time between a database and a Staccato in-memory synchronized database (IMSDB), which is illustrated in Fig. 2, comprising the steps of: (a) upon database 202 update, the updated data records are reflected to Allegro Network unit 204 for example by an array of triggers; if the update is relevant for the running applications a notification is generated 206 and (b) transmitted from Allegro network 204 to at least one Allegro machine 208; (c) the notification is transmitted from Allegro machine 206 to at least one allegro notification manager 210 of at least one application 212; (d) the notification is distributed to the application 212 according to at least one pre-defined subscriber type; (e) the notification is transmitted to at least one Staccato search engine; (f) the data records are indexed and updated 214 into index database tables by Staccato search engine; and (e) stored in at least one index database table in Staccato IMSDB 216.

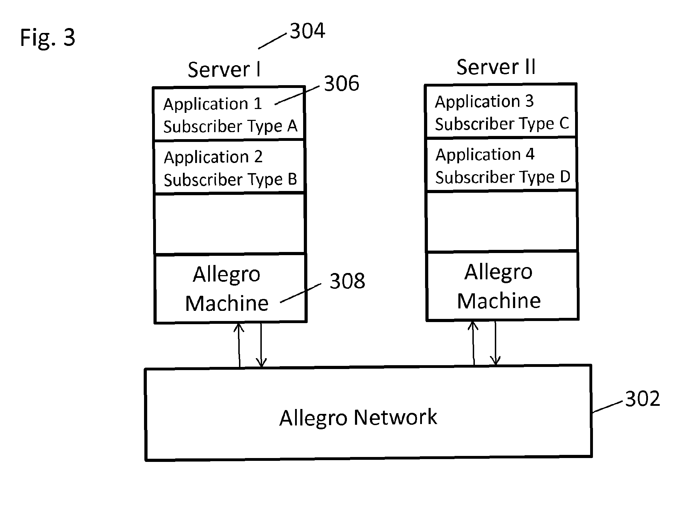

FIG. 3 is a diagram that illustrates Allegro network unit components according to one embodiment of the present invention. The Allegro network unit 302 comprises or may be in communication with at least one server 304 where each server has at least one application 306 and where each application 306 relates to at least one Staccato search engine. Allegro network comprises a pre-defined set of subscriber types that are defined by a subset of the database data records comprising a list of tables and specific columns for each table and wherein each application 306 in the Allegro network 302 is associated with at least one pre-defined subscriber type.

For example, subscriber type can be the following: a subscription for changes in "Hotel table" having columns: name, number of stars and description or on "Room table" having columns: name, category and number of available units.

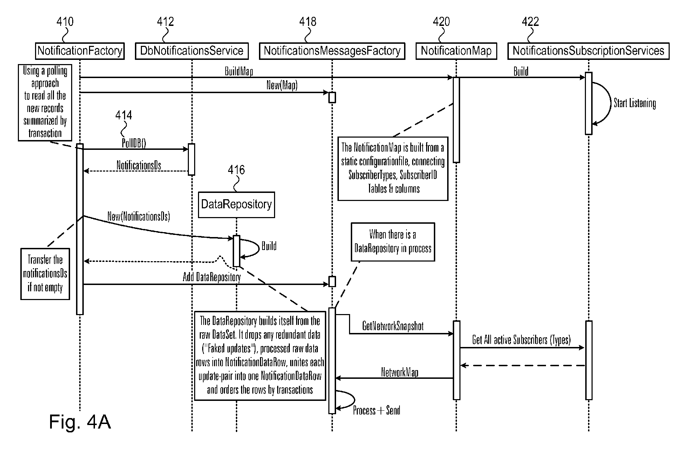

Fig. 4A illustrates an implementation of an embodiment of the invention, which is performed in several steps within the Allegro network unit using classes (classes may be defined as data structures which also contain the procedures for processing the data). As a first step, the NotificationsFactory 410, a class entity within the Allegro network unit, continuously pulls data from the database and sends it to another class entity of DbNotificationService 412 using a function of PoIIDb 414. Next, the data is sent back to the NotificationsFactory 410 which analyses the data to see if it was updated or deleted. The modified data records are then sent to the DataRepository 416 which generates the notification. For example, in case the hotel name has been changed in the database, PoIIDb pulls all the data records concerning the hotel, the NotificationsFactory 410 analyzes the data and sends only the changed hotel name to the DataRepository 416. The DataRepository 416 builds a new structure which is sent to the NotificationMessageFactory 418 which generates a NotificationMap 420 according to the relevant subscribers which are subscribed to receive updates for this data. For example, all the subscribers receiving updates on the new hotel name. Finally, a message for each destination on the NotificationMap 420 is created and sent to the subscribers by the NotificationSubscriptionSend 422.

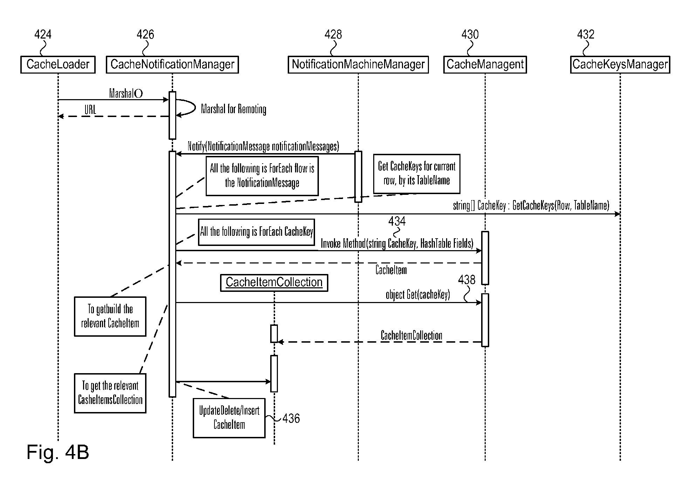

Fig. 4B illustrates the same process as in Fig. 4A but from the Staccato synchronization unit point of view. First, there is an internal technical confirmation between the CacheLoader 424 and the CacheNotificationManager 426 (using for example Microsoft technology for communication - marshal for remoting) for establishing the communication within the application itself. The NotificationMachineManager 428 receives notifications and transfers them to the CacheManager 430 which checks the internal CacheKeyMap 432 that comprises all the subscribers and their subscription types. All the CacheKey strings are read and analyzed, and those to be modified are added to a table InvokeBuildItemMethod 434. Finally, the data is updated/deleted/inserted 436. For example, Staccato has the following objects: hotel, hotel room and price. In case only the hotel name is updated, a notification arrives, and the CacheKeyMap 432 of hotel, hotel room and price is retrieved. The notification is analyzed and then only the relevant chacheKey is sent (object: GetCacheKey 438). Then only the hotel name is replaced.

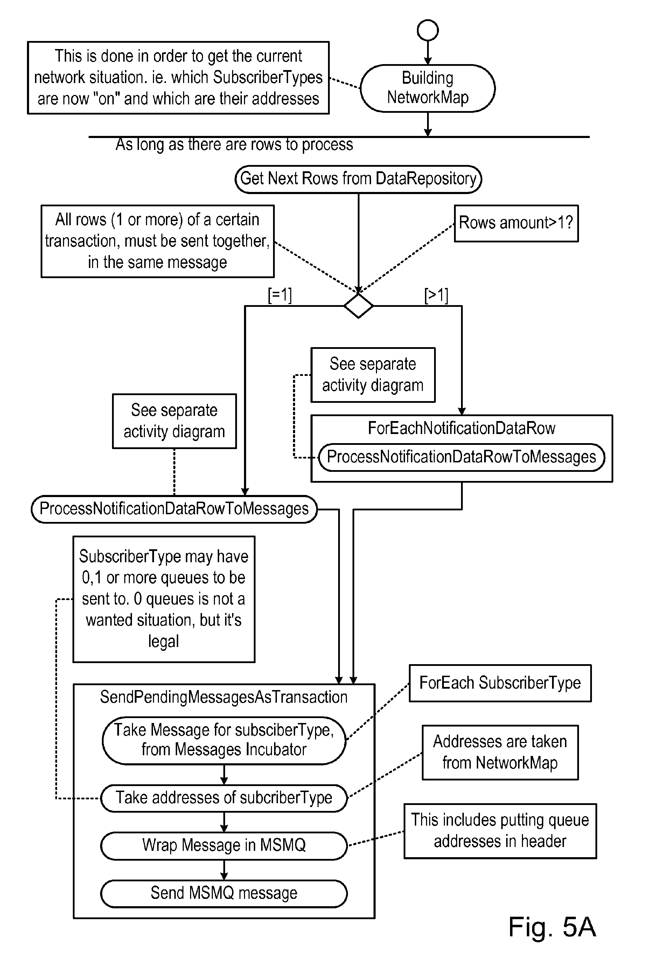

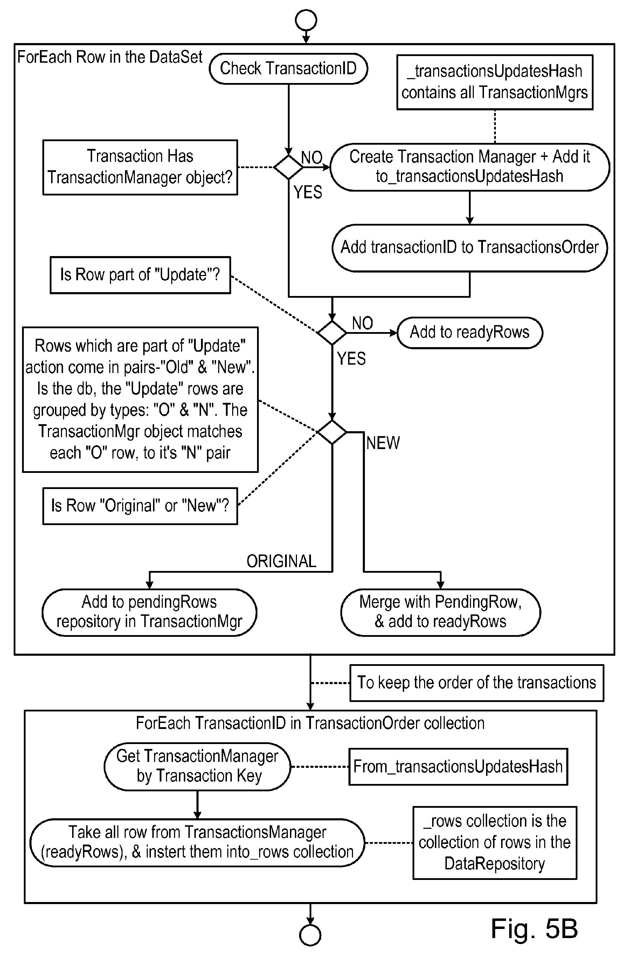

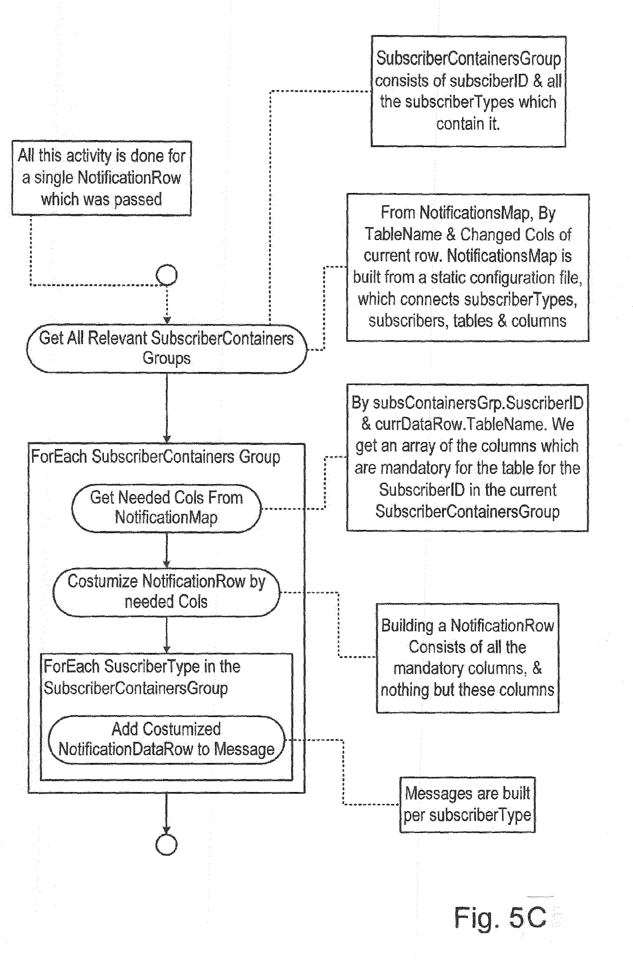

Figs. 5A-C further illustrate a flowchart of the implementation of an embodiment of the invention according to a software programming perspective.

As shown in Figure 3 the Allegro machine 308 that is connected to the Allegro network keeps an updated map of all applications 306 running on the server 304 and subscriber types of each application 306. An application may be running, loading or down. When the status of an application is changed, i.e. change in the application map, Allegro machine updates the Allegro monitor. An application may be removed from map if it is unreachable, or if it explicitly unsubscribes itself.

At a time when a Staccato search engine is launched the related application 306 subscribes itself to the Allegro network 302 via the Allegro machine 308 and the IMSDB is synchronized with at least one data record according to at least one pre-defined subscription types of said application.

According to another embodiment of the invention the synchronization system further comprises a second replicate database that stores all the data tables of the database. During data loading, in order to get reliable snapshot data the system blocks all data modification by locking all participating tables. Influence on the database is avoided by performing the lock on the replicated database.

In an embodiment of the invention, the data synchronization system further comprises monitoring tools of: (1) Staccato Profiler that is configured to track segmentation of search types, search duration and number of results, (2) Memory snapshot that is configured to retrieve memory and database snapshots examine and compare data reliability and integrity, and (3) Debug tool that allows production environment simulation by loading memory snapshot.

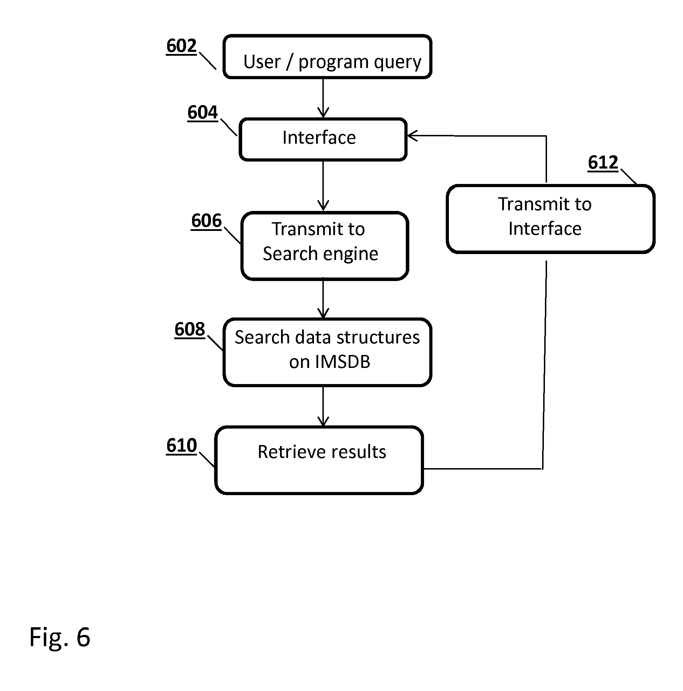

According to another embodiment of the present invention, as illustrated in Fig. 6, there is provided a method for searching at least one data records in the data synchronization system comprising the steps of (a) upon user provoked query 602 the interface 604 transmits the query to the Staccato search engine 606 which searches the IMSDB index database tables 608; (b) retrieves at least one data records 610 by pointer walk (pointer walk means making minimal computation during the search, the data was indexed in way that when a search query arrives, minimum computation is needed and a response to the search query is performed by fetching the prepared data from the RAM. Slots of data from each RAM area are known as "pointer walk"); (c) and sends query results to the interface 612.

In an embodiment of the invention the system may be scaled up, for example, in case the number of users has doubled (e.g. the number of queries has grown from 0.5 million/day to 1.0 million searches per day) then additional IMSDB's are added thereby allowing the same retrieval time.

Embodiments of the present invention are in support of: large number of searches -for example approximately more than 65,000,000 per day and short average search time ranging for example between 5 milliseconds to 30 seconds (differing by several parameters such as location, date range, concurrency etc.). The system of the present invention supports low database loads since searches are performed in the IMSDB and not on the database.

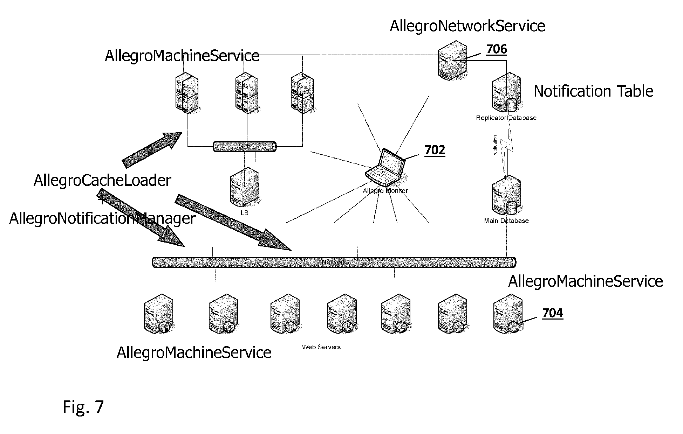

According to another embodiment of the invention shown in Figure 7, the Allegro notification unit may include Allegro monitor 702 that provides network wide real-time monitoring services to all Allegro components. The Allegro monitor 702 keeps an updated map of: (a) servers 704 running in Allegro network 706 and (b) running applications on each server 704 and their subscriber types. Allegro monitor is also configured to perform notification tracing (Fig. 10, 910) i.e. trace any notification from the point the database was modified through the AN point to the AM point and finally to the application, accessing Allegro system performance (how long each step took) as well as the completion of the process (i.e. X notifications were generated, X reached their destination(s)), in case performance or completeness has been compromised an alert will be generated to the engineers.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system .

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

Although selected embodiments of the present invention have been shown and described, it is to be understood the present invention is not limited to the described embodiments. Instead, it is to be appreciated that changes may be made to these embodiments without departing from the principles and spirit of the invention, the scope of which is defined by the claims and the equivalents thereof.

## Claims

1. A computerized data synchronization system of a database, said system
comprising:
a notification unit configured to be in communication with said database, and download data from said database; and
at least one search engine configured to be in communication with said notification unit, said search engine comprises at least one in-memory synchronized database (IMSDB), wherein said search engine is configured to store the downloaded data in said IMSDB.

2. The computerized data synchronization system of claim 1, wherein said search engine comprises at least one index database table according to pre-built structures.

3. The computerized data synchronization system of claim 1, wherein the search engine is connected to at least one interface that is in communication with at least one IMSDB.

4. The computerized data synchronization system of claim 1, wherein the notification unit comprises:
a network unit configured to manage notifications at said synchronization system network.

5. The computerized data synchronization system of claim 1, wherein the notification unit is in communication with at a plurality of servers and wherein each of said servers has at least one application.

6. The computerized data synchronization system of claim 1, comprising:
at least one notification machine configured to manage notifications in a system machine level;
at least one notification manager that is configured to manage notifications in an application level; and
a monitor that provides real-time monitoring services to said system network.

7. The computerized data synchronization system of claim 1, wherein the network unit comprises:
a pre-defined set of subscriber types that are defined by a subset of the database data.

8. The computerized data synchronization system of claim 7, wherein said database data comprise a list of tables and specific columns for each said table and wherein an application in the network unit is associated with at least one pre-defined subscriber type.

9. The computerized data synchronization system of claim 7, wherein the notification machine comprises:
an updated map of applications on each said server and their subscriber type, wherein each application may run or load or down and wherein upon change in the application map the machine updates a monitor and the application is removed from map.

10. The computerized data synchronization system of claim 9, wherein the monitor comprises:
updated map of servers running in the network unit; and
updated map of all applications running on each server and their subscriber types.

11. The computerized data synchronization system of claim 9, wherein the monitor performs notification tracing.

12. The computerized data synchronization system of claim 1, wherein the system further comprises a second replicate database that stores all the data records of the database.

13. The computerized data synchronization system of claim 12, wherein during load time the system blocks database update by locking all participating tables on second replicate database.

14. The computerized data synchronization system of claim 1, wherein the system further comprises monitoring tools said monitor tools, comprising:
a profiler configured to track segmentation of search types, search duration and number of results; and
memory snapshot that is configured to retrieve memory and database snapshots; and
debug tool that allows production environment simulation by loading memory snapshot.

15. A computerized data synchronization method for synchronizing data records in real-time between a database and in-memory synchronized database (IMSDB) in a data synchronization system, the method comprising:
reflecting updated data records to a Network unit;
transmitting a notification from said network unit to at least one machine;
transmitting the notification from the machine to at least one notification manager of at least one application;
distributing the notification to at least one application according to at least one pre-defined subscriber type;
transmitting notification to at least one search engine;
indexing updated data records into index database tables by the search engine; and
storing at least one index database table in IMSDB.
